# EUROPÄISCHE PATENTANMELDUNG

(11) **EP 1 462 911 A2**
(43) Veröffentlichungstag der Anmeldung: **29.09.2004**
(21) Anmeldenummer: 03025801.6
(22) Anmeldetag: 18.11.2003
(51) Int. Cl.: G06F 1/16

(54) **Multifunktionaler Rollschrank/mobiles Klassenzimmer**

(30) Priorität: 28.03.2003 DE 20305064 U
(71) Anmelder: Hollein, Rudolf, 89551 Königsbronn (DE)
(72) Erfinder: Hollein, Rudolf, 89551 Königsbronn (DE)

(57) **Zusammenfassung**

Die im Bildungsbereich durchgeführten Unterrichtseinheiten und Seminare, in denen der Computer eine zentrale Rolle spielt, sind von dem Vorhandensein eines Computerraums abhängig.

Sinn der Erfindung ist es, mit einer mobilen Einheit in einem beliebigen Raum ohne großen vorbereitenden Zeitaufwand Unterricht, Fortbildungen oder Seminare abzuhalten und zwar so, als hätte man einen voll ausgestatteten Computerraum zur Verfügung. Das mobile Klassenzimmer bietet mit der wireless-LAN - Technik kabelfreies Arbeiten.

Der insgesamt hohe Sachwert des Rollschranks/mobilen Klassenzimmers erfordert Sicherheitsvorkehrungen, die Beschädigungen oder Diebstahl verhindern. Dies wird dadurch erreicht, dass sämtliche Komponenten schnell und unkompliziert verschließbar und damit dem Zugriff Unbefugter entzogen sind.

## Beschreibung

Bei dem anzumeldenden multifunktionalen Rollschrank/ mobiles Klassenzimmer handelt es sich um einen abschließbaren Rollwagen zur Aufnahme von bis zu 17 Notebooks, einem Drucker, Beamer sowie wireless- LAN - Technik.

Sämtliche, für multimedales Lehren und Lernen in diesem Rollschrank untergebrachten Geräte sind miteinander über Funk verbunden, die fest installierten Geräte wie Datenbeamer, Drucker und Lehrer-Notebook sind miteinander verbunden und nach Öffnen von seitlichen verschließbaren Klappen bzw. durch eines nach hinten versenkbaren, in der Mitte des Rollwagens befindlichen Deckels leicht zugänglich.

Der Rollschrank dient auch als Ladestation für die in den Notebooks befindlichen Batterien - selbst im geschlossenen Zustand ist ein elektronisch gesteuerter Ladevorgang möglich.

In Schulungssituationen mit vernetzten Notebooks sind nur mit hohem Zeitaufwand die erforderlichen multimedialen Peripherie-Geräte in Betrieb zu setzen.

Meistens müssen diese Geräte auf der Oberseite des Aufbewahrungsbehälters aufgebaut und dann miteinander verkabelt werden. So aufgebaut, sind die Geräte jeglichem Zugriff ausgesetzt.

Um dies zu umgehen und den Einsatz der Notebooks zu erweitern ist der anzumeldende Rollschrank mit bisher nicht verwirklichten Komponenten ausgestattet.

Im oberen Teil des Rollwagens sind Beamer, Drucker, Master-Notebook und wireless LAN-Technik untergebracht.

Dadurch ist es möglich, dass die Notebooks untereinander und mit der oberen multimedialen Geräteeinheit des Rollwagens vernetzt sind, bzw. kommunizieren können.

Durch die fest installierten Verbindungskabel innerhalb der Geräteeinheit ist eine schnelle Inbetriebnahme möglich.

Je nach Kundenwunsch kann dieAusführung in unterschiedlichen Abmessungen, Materialien sowie Oberflächen (Farbe, Beschaffenheit) erfolgen.

Gegenstand der Erfindung ist ein abschließbarer multifunktionaler Rollwagen zur Aufnahme von bis zu 17 Notebooks, einem Drucker, Beamer sowie wireless- LAN - Technik/Internetzugang.

Bei Schulungssituationen mit vernetzten Notebooks sind durch die Erfindung ohne hohen Zeitaufwand die erforderlichen multimedialen Peripherie-Geräte in Betrieb zu setzen.

Alle Geräte sind miteinander verkabelt und in geschlossenem Zustand ist jeglicher Zugriff verwehrt.

Die Front, hinter welcher die Notebooks untergebracht sind, besteht aus einem abschließbaren Rollladen (1). Datenbeamer als auch Notebook sind nach Öffnen von seitlichen, ebenfalls verschließbaren Klappen durch herausziehbare Schubladen in Betrieb zu nehmen. Der in der Mitte des Rollwagens befindliche Drucker ist durch Hochklappen eines nach hinten versenkbaren Deckels (3) zugänglich. Die integrierte Wireless-LAN -Technik (11) ermöglicht eine Kommunikation der Notebooks untereinander sowie zu den im Rollschrank fest installierten Komponenten wie Beamer, Drucker und Master-Notebook.

Alle Notebooks können während ihrer Aufbewahrung gleichzeitig aufgeladen werden.

Aufbewahrungsbehältnisse, Container oder Schränke für eine größere Anzahl von Notebooks sind - soweit die Recherche- bisher auf eine reine Aufbewahrungsfunktion beschränkt.

Um dies zu umgehen und den Einsatz der Notebooks zu erweitern ist der anzumeldende Rollwagen mit bisher nicht verwirklichten Komponenten ausgestattet.

Im oberen Teil des Rollwagens sind Beamer, Drucker, Master-Notebook und wireless LAN-Technik untergebracht.

Dadurch ist es möglich, dass die Notebooks untereinander und mit der oberen multimedialen Geräteeinheit des Rollschranks vernetzt sind, bzw. kommunizieren können.

Durch die fest installierten Verbindungskabel in Kabelkanälen (10) innerhalb der Geräteeinheit und eine zentrale Stromversorgung (8)ist eine schnelle Inbetriebnahme möglich.

Hinsichtlich eines von der Kapazität der Notebook-Batterien unabhängigen Betriebs lagern die Notebooks auf herausnehmbaren Tabletts (2), auf welchem sich ein Netzteil befindet. Somit können die Notebooks am stationären Netz betrieben werden.

Zum Aufladen der Notebook-Akkus während ihrer Lagerung im Rollwagen sind die Ladesteckdosen (12) an eine Zeitsteuerautomatik(6) angeschlossen.

Mit der Erfindung des multifunktionalen Rollschranks kann jeder (Schulungs-)Raum innerhalb kürzester Zeit zu einem Computerraum umfunktioniert werden.

Die Stromversorgung der gesamten Einheit erfolgt über ein zentrales Kabel, welches zusätzlich mit Blitz-bzw. Überspannungsschutz versehen ist.

Die großen fahr- und lenkbaren Rollen - alle vier Rollen lenkbar (4) - erlauben leichte und einfache Manövriervorgänge.

Alle Geräte sind unmittelbar nach Öffnen der Klappen, bzw. des Rollladens sofort in Betrieb zu nehmen.

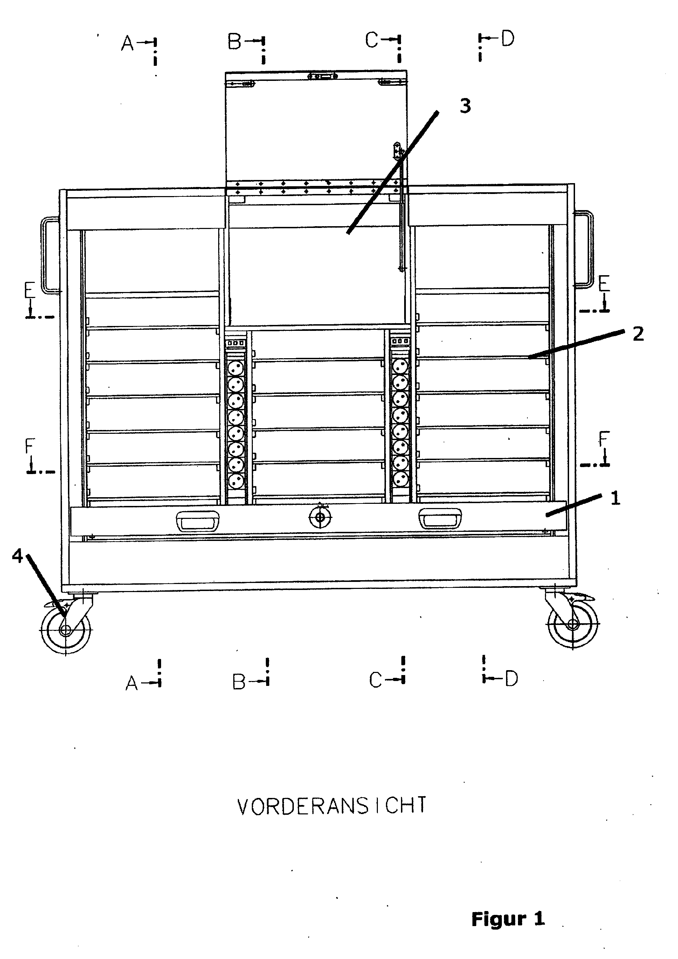

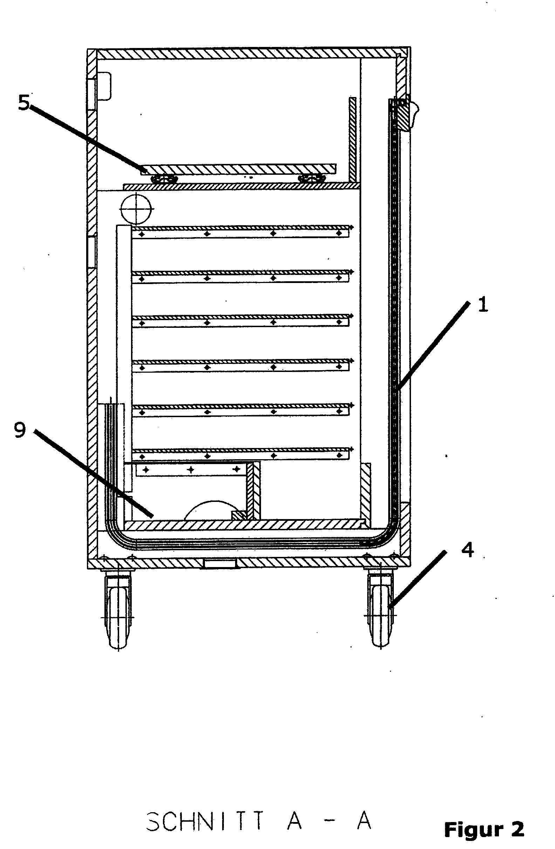

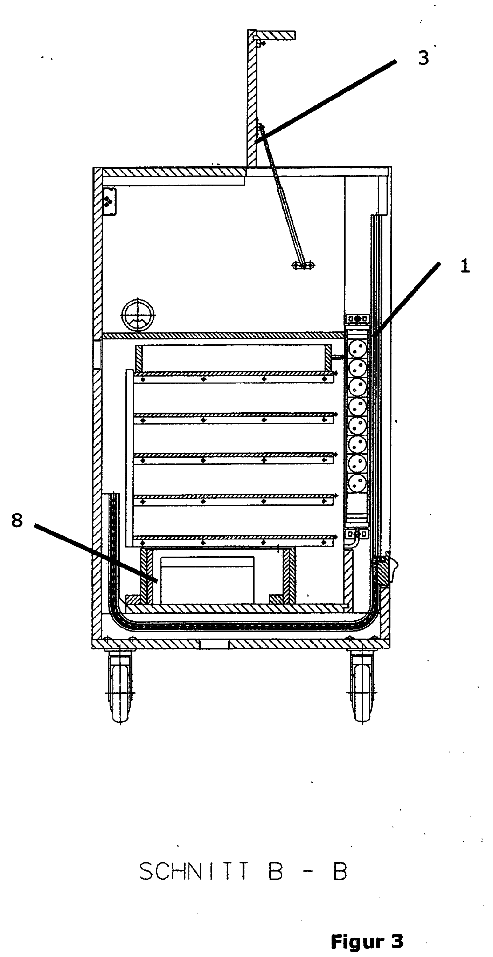

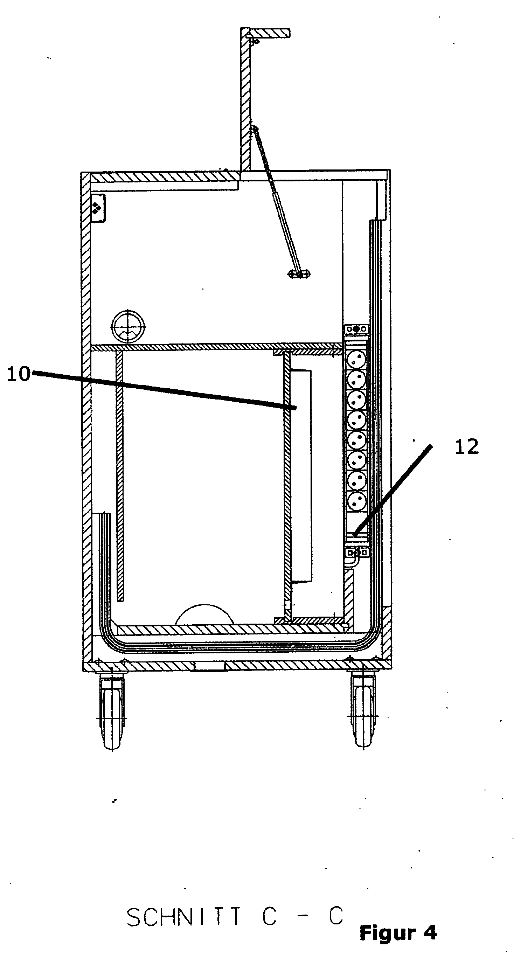

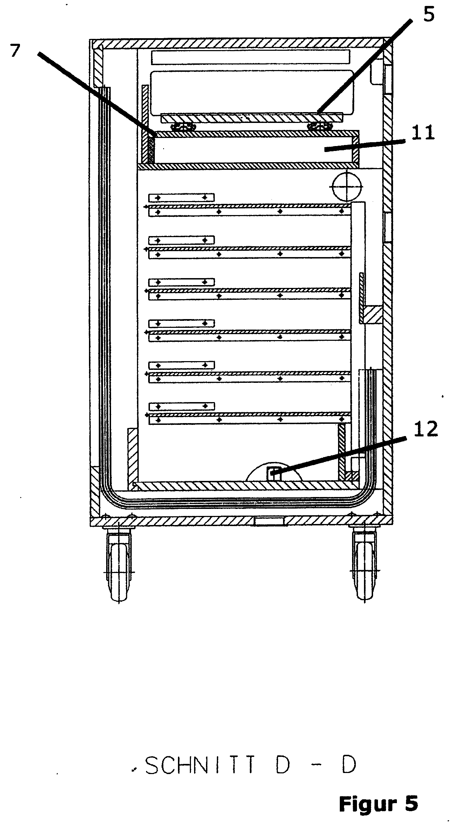

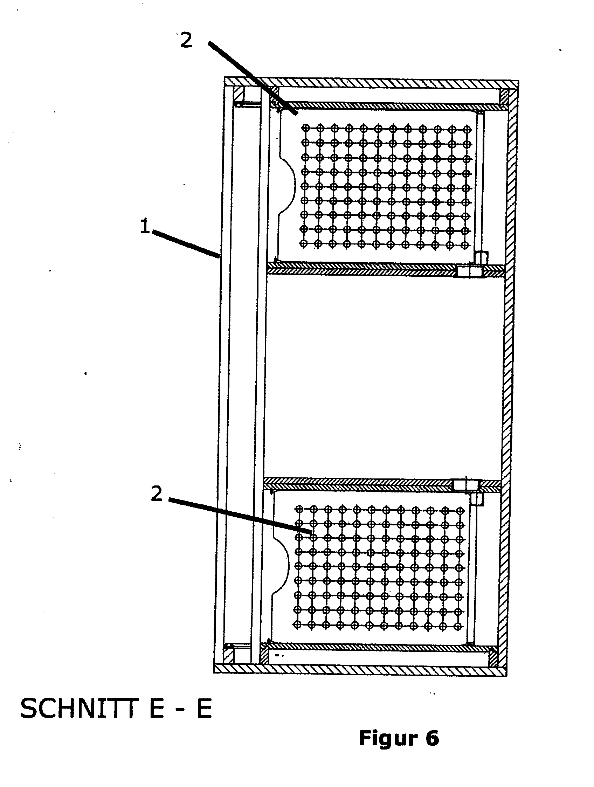

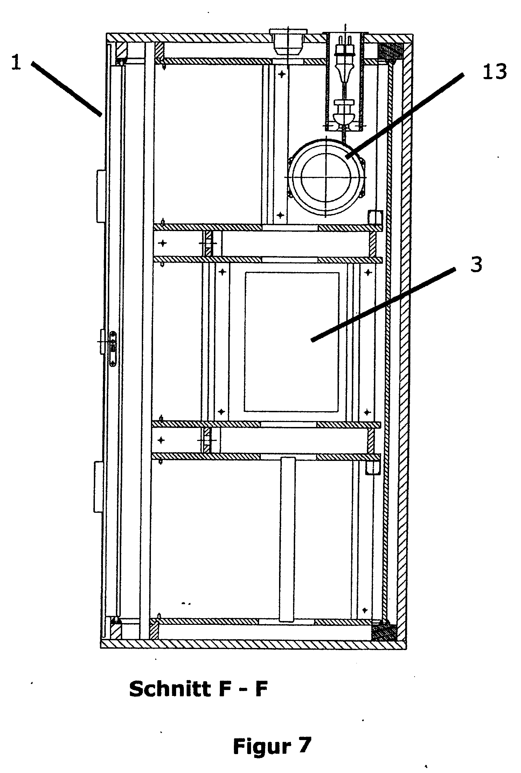

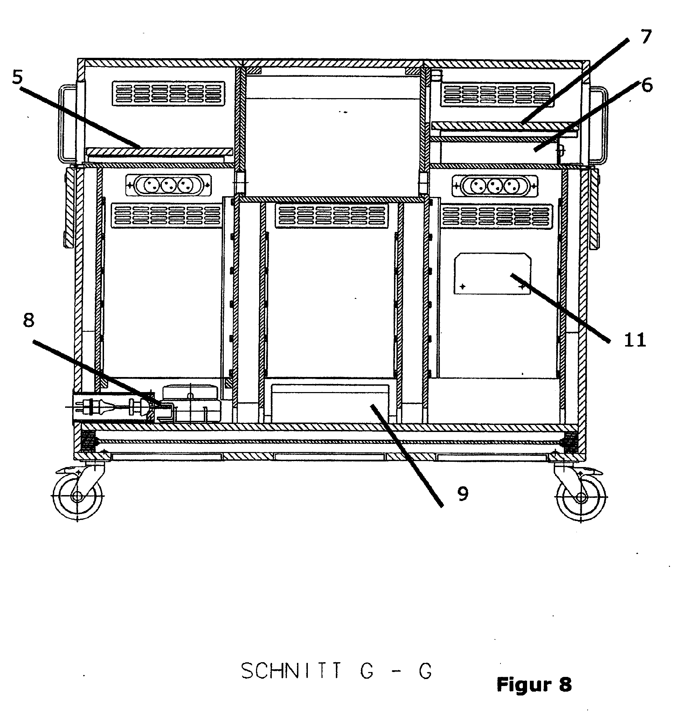

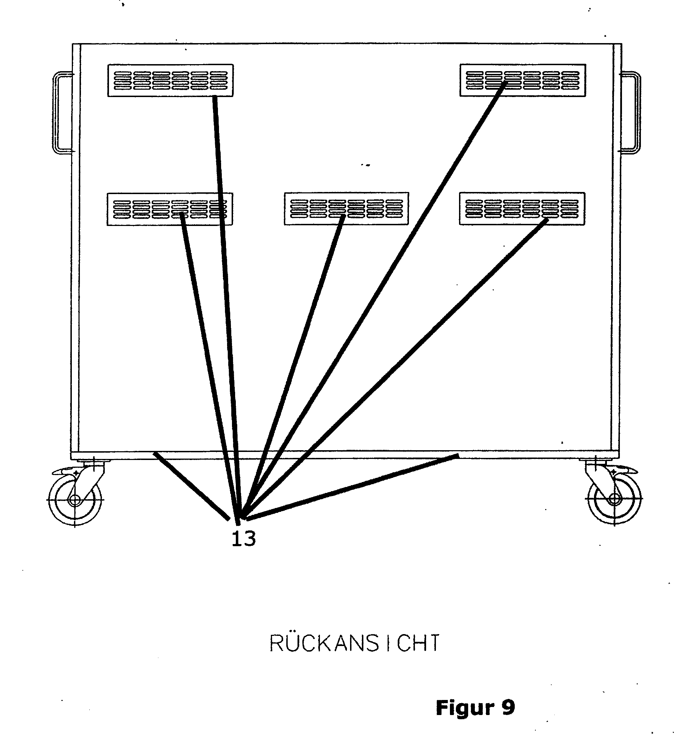

## Patentansprüche

1. Abschließbarer Rollschrank zur Aufnahme von bis zu 17 Notebooks, einem Drucker, Beamer sowie wireless- LAN/Internet-Technik **dadurch gekennzeichnet,**
**dass** die Front aus einem abschließbaren Rollladen besteht, der Datenbeamer als auch das Notebook nach Öffnen von seitlichen, ebenfalls verschließbaren Klappen durch herausziehbare Schubladen (5,7) in Betrieb zu nehmen sind. Der in der Mitte des Rollwagens befindliche Drucker ist durch Hochklappen eines nach hinten versenkbaren Deckels (3) zugänglich.

2. Die Kombination der einzelnen Komponenten - im oberen Teil des Rollwagens sind Beamer, Drucker, Master-Notebook und wireless LAN-Technik untergebracht - ist **dadurch gekennzeichnet, dass** diese durch die fest installierten Verbindungskabel innerhalb der Geräteeinheit eine schnelle Inbetriebnahme sowie die Vernetzung und Kommunikation der Notebooks untereinander und mit der oberen multimedialen Geräteeinheit des Rollwagens. ermöglichen

3. Die zur Aufbewahrung der Notebooks im Schrank befindlichen Tabletts (2) sind **dadurch gekennzeichnet, dass** es herausnehmbare Tabletts sind, auf welchen sich ein Netzteil befindet. Die Notebooks können einerseits vom Netzteil getrennt entnommen werden, dann kann netzunabhängig mit dem Akku gearbeitet werden oder das Notebook wird samt Tablett entnommen, wodurch die Notebooks am stationären Netz betrieben werden und nicht mehr vom eingebauten Akku abhängig sind.

4. Der Vorgang der Aufladung der Notebook-Akkus ist **dadurch gekennzeichnet, dass** die Notebooks während ihrer Lagerung im Rollwagen durch Adaption an eine Ladevorrichtung (9) mit Zeitsteuerautomatik aufgeladen werden. Entlüftungsgitter (13) am Boden und in der Rückwand verhindern einen Wärmestau.
